## Europäisches Patentamt

## European Patent Office

## Office européen des brevets

(19)

(11) Veröffentlichungsnummer: **0 173 007**
**A2**

(12)

# EUROPÄISCHE PATENTANMELDUNG

(21) Anmeldenummer: 85107155.5

(22) Anmeldetag: 11.06.85

(51) Int. Cl.⁴: **C 02 F 1/34**

(30) Priorität: 02.08.84 DE 3428540

(43) Veröffentlichungstag der Anmeldung: 05.03.86
Patentblatt 86/10

(84) Benannte Vertragsstaaten: **AT BE CH DE FR GB IT LI NL SE**

(71) Anmelder: **Uhde GmbH, Friedrich-Uhde-Strasse 15, D-4600 Dortmund 1 (DE)**
Anmelder: **Siekmann, Helmut E. Prof. Dr.-Ing., Hermannstrasse 3A, D-1000 Berlin 37 (DE)**

(72) Erfinder: **Siekmann, Helmut E. Prof. Dr.-Ing., Hermannstrasse 3A, D-1000 Berlin 37 (DE)**

(74) Vertreter: **Patentanwälte Meinke und Dabringhaus Dipl.-Ing. J. Meinke Dipl.-Ing. W. Dabringhaus, Westenhellweg 67, D-4600 Dortmund 1 (DE)**

(54) Vorrichtung zur Erzeugung von Kavitation.

(57) Mit einer Vorrichtung zur Erzeugung von Kavitation innerhalb einer strömenden Flüssigkeit soll eine Lösung geschaffen werden, mit der insbesondere der vorrichtungsmäßige Aufwand zur gezielten Erzeugung von Kavitation und der Einflußnahme auf den kavitierten Flüssigkeitsanteil erreichbar ist.

Dies wird dadurch erreicht, daß sie mit einem Hochbehälter (1), einem Auslaufstutzen (2), wenigstens einem sich an den Auslaufstutzen (2) anschließenden Rohrkrümmer (3) sowie einem Fallrohr (4) und mit einer Regelarmatur (5) im Bereich des Fallrohrendes ausgerüstet ist.

I

Die Erfindung richtet sich auf eine Vorrichtung zur Erzeugung von Kavitation innerhalb einer strömenden Flüssigkeit.

Der Siedepunkt von Flüssigkeiten ist stark druckabhängig. Mit abnehmendem Druck wird auch die Siedetemperatur kleiner. Bei starken Unterdrücken, wie sie bei großen Strömungsgeschwindigkeiten oder bei Absenken des Umgebungsdruckes auftreten können, kann der Druck örtlich bis auf den Siededruck sinken. Derartige Verhältnisse kommen bei hydrodynamischen Strömungsmaschinen wie Pumpen, Turbinen, Propellern, z.B. bei der Umströmung von Schaufeln, häufig vor. Der beschriebene Vorgang wird Kavitation genannt. Bei ihm scheidet die Flüssigkeit Dampf und Gasblasen aus, die zur Hohlraumbildung führen. Bei wieder ansteigendem Druck ist diese Erscheinung mit heftigem Zusammenfallen der Blasen, sogenannte Stoßkondensation, verbunden (E. Truckenbrodt, "Steuerungsmechanik", Springer Verlag 1968, Seite 15 oder Dubbel, "Taschenbuch für den Maschinenbau", Springer-Verlag 1983, Seite 893).

Ist diese Erscheinung wegen der Möglichkeit des Anfressens des angeströmten Materiales und wegen der durch die Kavitation hervorgerufenen erheblichen Geräusche teilweise unerwünscht, so kann dieses Phänomen vielfach auch nutzbringend eingesetzt werden, insbesondere beispielsweise auf die Abtötung von Keimen in Abwasser unterstützend wirken. Hiermit beschäftigt sich die DE-PS 24 55 633.

Bei dieser bekannten Verfahrensweise wird in Zonen mit einer zum Abtöten von Keimen ausreichenden Ozonkonzentration in das Wasser eine so große Schallenergie eingeleitet, daß Kavitation auftritt, wodurch sich eine Steigerung der keimtötenden Wirkungen des Ozons in dem Abwasser erreichen läßt. Diese bekannten Maßnahmen, Kavitation durch Schall zu erzeugen, sind apparativ sehr aufwendig. Bekannt ist es auch, Kavitation durch einen Kavitator zu erzeugen, der im wesentlichen einer Zentrifuge entspricht. Auch dieser Aufwand ist vergleichsweise groß. Ebenfalls sind Kavitationserzeuger durch schwingende Kolben (Magnetostriktion) bekannt, die auf der Grundlage von Ultraschall arbeiten.

Aufgabe der Erfindung ist die Schaffung einer Lösung, mit der insbesondere der vorrichtungsmäßige Aufwand zur gezielten Erzeugung von Kavitation und der Einflußnahme auf den kavitierten Flüssigkeitsanteil erreichbar ist.

Bei einer Vorrichtung der eingangs bezeichneten Art wird diese Aufgabe gemäß der Erfindung dadurch gelöst, daß sie mit einem Hochbehälter, einem Auslaufstutzen, wenigstens einem sich an den Auslaufstutzen anschließenden Rohrkrümmer sowie einem Fallrohr und mit einer Regelarmatur im Be-

reich des Fallrohrendes ausgerüstet ist.

Diese Vorrichtung ist vergleichsweise einfach, aber sehr wirkungsvoll. Insbesondere ist es mit ihr möglich, die Ausbildung der Kavitation durch ganz einfache konstruktive Mittel zu steuern und den jeweiligen Bedürfnissen anzupassen.

Wesentlich für die Erfindung ist eine Gestaltung der Vorrichtung die darin besteht, daß im Bereich des Fallrohres nach dem Rohrkrümmer Einrichtungen zur Entnahme bzw. Abtrennung des kavitierten Strömungsanteiles von der Hauptströmung vorgesehen sind. Mit dieser Maßnahme kann die Vorrichtung einer Vielzahl von Anwendungszwecken zugeführt werden. So kann z.B. durch diese Einbauten erreicht werden, leicht flüchtige Stoffe, die sich im hohen Maße im Kavitationsbereich anhäufen, dort abzuziehen und einer weiteren Verarbeitung oder Entsorgung zuzuführen. In gleicher Weise kann man eine solche Vorrichtung dann auch z.B. zur Destillation von Fluidgemischen benutzen, wenn beispielsweise chlorierte Kohlenwasserstoffe abgetrennt werden sollen, mit dicht aneinanderliegenden Siedepunkten.

Nach der Erfindung ist auch vorgesehen, daß sich das Fallrohr in seinem Durchmesser nach den Abtrenneinbauten erweitert. Grundsätzlich könnte dieser Bereich auch bereits dort beginnen, wo die Einbauten vorgesehen sind. Die Er-

weiterung unterhalb dieses Bereiches ermöglicht aber dort gezielt den Druck so ansteigen zu lassen, daß die Kavitation in der gewünschten Ausbildung entsteht.

Die Erfindung sieht auch vor, daß eine Mehrzahl von Rohrkrümmern mit anschließenden Fallstrecken mit Abtrenneinrichtungen des jeweiligen kavitierten Strömungsanteiles hintereinander und/oder parallel vorgesehen sind. Eine solche Folge von Rohrkrümmern und Fallstrecken ermöglicht es ganze Spektren von Medien zu entnehmen oder aber ein zu behandelndes Fluidvolumen in einem sehr großen Teil den jeweiligen Kavitationsbereichen zu unterwerfen.

Sinnvoll kann es auch sein, wenn unterhalb des Fallrohres ein Auffangbecken sowie eine Pumpeneinrichtung zur Rückförderung der Flüssigkeit in den Hochbehälter vorgesehen sind. Dies ist insbesondere dann nützlich, wenn die zu behandelnde Flüssigkeit mehrfach einer Kavitationsbehandlung unterworfen werden soll.

Nach der Erfindung kann des weiteren vorgesehen sein, daß zur weiteren Behandlung des aus dem Hauptstrom entfernten kavitierten Strömungsanteiles Flüssigkeitsabscheider und/oder Brüdenverdichter und/oder Kondensatoren vorgesehen sind, wobei diese Anlageteile sich insbesondere danach richten, welche Art von Fluiden behandelt werden und welche Verfahren durchgeführt werden sollen.

- 5 -                    0173007

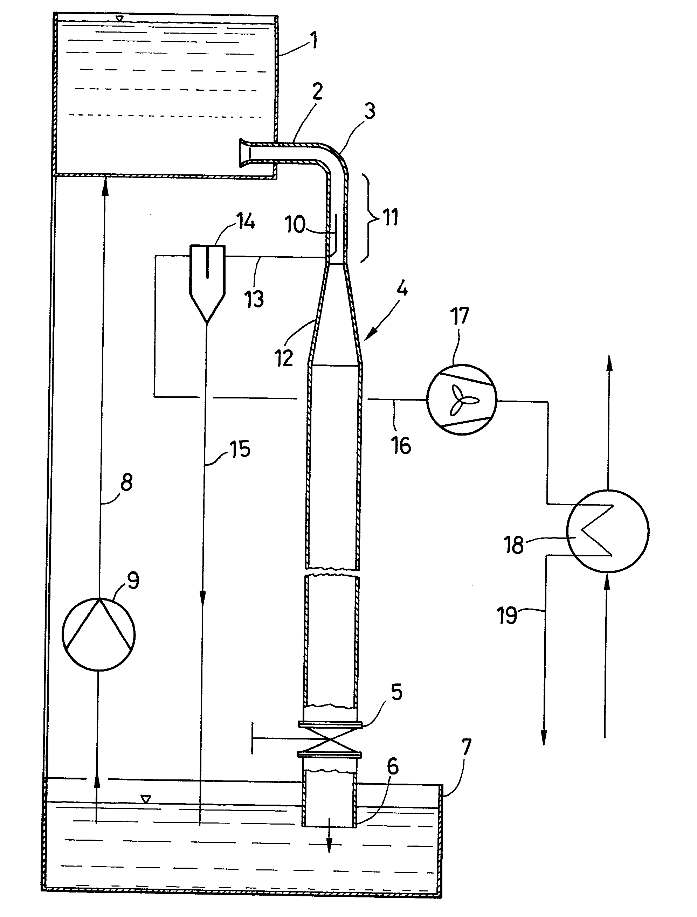

Die Erfindung ist nachstehend anhand der Zeichnung beispielsweise näher erläutert. Diese zeigt in der einzigen
Figur eine Vorrichtung nach der Erfindung.

Ein Hochbehälter 1 ist im dargestellten Beispiel mit einem
horizontalen Auslaufstutzen 2 ausgerüstet, der über einen
Rohrkrümmer 3 in ein allgemein mit 4 bezeichnetes Fallrohr
mündet.

Das Fallrohr 4 ist in Schwerkraftrichtung ausgerichtet und
weist an seinem unteren Ende eine Regelarmatur 5 auf. Mit
seiner Austragöffnung 6 mündet das Fallrohr 4 in ein Auffangbecken 7. Vom Auffangbecken 7 führt eine Rückführleitung 8 über eine Pumpe 9 wieder in den Hochbehälter 1.

Wesentlich für die Erfindung sind der Rohrkrümmer 3, Einrichtungen 10 unmittelbar hinter dem Rohrkrümmer 3 in einem senkrechten Rohrstück, welches mit einer Klammer 11
bezeichnet ist und die Kavitationsstrecke darstellen soll.
Die Kavitationsbedingungen sind bereits vor dem Rohrkrümmer 3 gegeben. Es läßt sich jedoch erst im Rohrkrümmer
aufgrund des radialen Druckgefälles eine Trennung in einen
dampfförmigen und flüssigen Teilstrom erreichen. Hinter
den Einrichtungen 10, z.B. Ablenkblechen mit Absaugdüsen,
erweitert sich das Fallrohr 4 trichterförmig. Dieser
Bereich ist mit 12 bezeichnet.

Die Einrichtungen 10 sind, wie bereits erwähnt, mit einer Absaugleitung 13 ausgerüstet, die im dargestellten Beispiel in einem Flüssigkeitsabscheider 14 mündet. Die abgeschiedene Flüssigkeit wird über eine Leitung 15 dem Auffangbecken 7 zugeführt. Die behandelten Brüden werden im dargestellten Beispiel über eine Leitung 16, einem Brüdenverdichter 17, von dort einem Wärmetauscher bzw. Kondensator 18 zugeführt. Die Kondensatableitung ist mit 19 bezeichnet.

Natürlich ist das beschriebene Ausführungsbeispiel der Erfindung noch in vielfacher Hinsicht abzuändern, ohne den Grundgedanken zu verlassen. So ist die Erfindung insbesondere nicht auf eine spezifische Querschnittsform, insbesondere des Krümmers und des Fallrohres, beschränkt. Hier kann ein für Rohre üblicher kreisrunder Querschnitt ebenso vorgesehen sein, wie ein ovaler, ein eckiger oder ein solcher nach einem polygonen Zug. Auch die Umlenkung im Krümmer muß nicht zwingend so gestaltet sein, wie in der Abbildung wiedergegeben. Statt der 90$^\circ$ Umlenkung können Ablenkbereiche zwischen 45$^\circ$ und 135$^\circ$ vorgesehen sein. Dies kommt wiederum auf das Verfahren an, in dem die Vorrichtung eingesetzt werden soll oder auch auf die Medien die behandelt werden sollen.

Ansprüche :

1. Vorrichtung zur Erzeugung von Kavitation innerhalb einer
   strömenden Flüssigkeit,
   dadurch gekennzeichnet,
   daß sie mit einem Hochbehälter (1), einem Auslaufstutzen
   (2), wenigstens einem sich an den Auslaufstutzen (2) anschließenden Rohrkrümmer (3) sowie einem Fallrohr (4) und
   mit einer Regelarmatur (5) im Bereich des Fallrohrendes
   ausgerüstet ist.

2. Vorrichtung nach Anspruch 1,
   dadurch gekennzeichnet
   daß im Bereich (11) des Fallrohres (4) nach dem
   Rohrkrümmer (3) Einrichtungen (10) zur Entnahme bzw.
   Abtrennung des kavitierten Strömungsanteiles von der
   Hauptströmung vorgesehen sind.

3. Vorrichtung nach Anspruch 2,
   dadurch gekennzeichnet,
   daß sich das Fallrohr (4) in seinem Durchmesser nach den
   Abtrenneinbauten (10) erweitert.

4. Vorrichtung nach einem der vorangehenden Ansprüche,
   dadurch gekennzeichnet,
   daß eine Mehrzahl von Rohrkrümmern (3) mit anschließenden
   Fallstrecken (4), mit Abtrenneinrichtungen (10) des

0173007

jeweiligen kavitierten Strömungsanteiles hintereinander und/oder parallel vorgesehen sind.

5. Vorrichtung nach Anspruch 4,
   dadurch gekennzeichnet,
   daß unterhalb des Fallrohres (4) ein Auffangbecken (7) sowie eine Pumpeinrichtung (9) zum Rückfördern der Flüssigkeit in den Hochbehälter (1) vorgesehen sind.

6. Vorrichtung nach einem der vorangehenden Ansprüche,
   dadurch gekennzeichnet,
   daß zur weiteren Behandlung des aus dem Hauptstrom entfernten kavitierten Strömungsanteiles Flüssigkeitsabscheider (14) und/oder Brüdenverdichter (17) und/oder Kondensatoren (18) vorgesehen sind.